# FASCICULE DE BREVET EUROPEEN

(11) **EP 0 932 943 B1**
(45) Date de publication et mention de la délivrance du brevet: **18.07.2001**
(21) Numéro de dépôt: 97909397.8
(22) Date de dépôt: 13.10.1997
(51) Int. Cl.: H04B 3/54, H02J 13/00

(54) **DISPOSITIF D'INTERFACAGE D'UNE LIAISON BIDIRECTIONNELLE COURANTS PORTEURS BASSE TENSION/RADIOFREQUENCE**
SCHNITTSTELLENEINRICHTUNG ZUR ZWEIRICHTUNGSVERBINDUNG ZWISCHEN NIEDERSPANNUNGSTRÄGERFREQUENZEN UND FUNKFREQUENZEN
INTERFACE DEVICE OF BI-DIRECTIONAL CONNECTION OF CURRENTS CARRYING LOW VOLTAGE/RADIOFREQUENCY

(30) Priorité: 15.10.1996 FR 9612562
(43) Date de publication de la demande: 04.08.1999
(73) Titulaire: ELECTRICITE DE FRANCE, 75008 Paris (FR)
(72) Inventeur: CHAFFANJON, Daniel, F-91230 Montgeron (FR)
(74) Mandataire: Fréchède, Michel
(86) Numéro de dépôt international: FR9701824
(87) Numéro de publication internationale: WO9817013

(56) Documents cités:
- EP-A- 0 128 416
- EP-A- 0 714 193
- US-A- 4 589 075
- US-A- 4 749 992
- PATENT ABSTRACTS OF JAPAN vol. 015, no. 219 (E-1074), 5 juin 1991 & JP 03 062631 A (NISSAN MOTOR CO LTD), 18 mars 1991,

## Description

L'invention concerne un dispositif d'interfaçage d'une liaison bidirectionnelle courants porteurs basse tension CPL-BT /radiofréquence entre une ligne de distribution d'énergie électrique basse tension, permettant la transmission de signaux par courants porteurs, et l'espace radioélectrique.

A l'heure actuelle, la transmission de messages tels que des messages de gestion par courants porteurs sur un réseau de distribution d'énergie électrique basse tension, réseau BT, en vue d'assurer la gestion de différents services auxquels des clients abonnés de ce réseau de distribution d'énergie électrique ont accès, est de plus en plus utilisée, en raison, d'une part, de la préexistence des accès aux installations de distribution d'énergie électrique, et, d'autre part, de l'accroissement au moins potentiel des types de services susceptibles d'être offerts.

D'une manière générale, ainsi que représenté de manière illustrative sur la figure la, pour une branche du réseau de distribution d'énergie électrique basse-tension, partant du transformateur HT/BT par exemple, un dispositif concentrateur est prévu.
Ce dispositif concentrateur, lié par une liaison téléphonique par exemple avec un centre de gestion, permet d'envoyer sur le réseau BT des messages de gestion selon un processus de répétition avec crédit.
Les installations de chaque abonné intéressé par les services sont équipées d'un circuit d'Interface Clientèle Communicante, circuit I.C.C., branché entre l'un des conducteurs de phase et le neutre du réseau. Les messages de gestion, émis par exemple par le concentrateur, sur appel du centre de gestion, en un mode semi-interactif, se propagent, dans des conditions de réception correctes sur le réseau BT, sur une distance n'excédant pas 200 à 300 mètres environ.
Pour cette raison, le processus d'émission des messages de gestion consiste en un processus de répétition avec crédit de répétition, tout circuit I.C.C. recevant de l'amont, c'est-à-dire du commutateur lui-même ou d'un circuit I.C.C. amont, un message de gestion qui ne lui est pas destiné procédant à une décrémentation d'une unité du crédit de répétition puis à une réémission du message reçu, avec un crédit de répétition décrémenté. Ce processus, assurant une transmission par vagues des différents messages de gestion, tel que représenté de manière illustrative en figure 1b, permet ainsi d'atteindre tout circuit I.C.C., quelle que soit la position de celui-ci sur le réseau BT. Le crédit de répétition est par exemple porté à zéro lorsque le message de gestion d'adresse déterminée a atteint le circuit I.C.C. d'adresse spécifiée correspondante, et le crédit de répétition initial attribué par le concentrateur est choisi en fonction de la configuration matérielle du réseau BT et de critères spécifiques de sécurité autorisant la répétition par le concentrateur du message de gestion doté de son crédit de répétition.

Dans l'état actuel de la technique précitée, le débit des données transmises, c'est-à-dire des messages de gestion, est de 300 bits / seconde. Un tel débit de transmission permet de caler temporellement les trames de données, porteuses de ces messages, sur la fréquence du réseau BT, 50 Hz, quel que soit le conducteur de phase sur lequel un circuit I.C.C. est branché.
Le mode de transmission est de type bidirectionnel à l'alternat avec émission à l'alternat d'une porteuse à 61 kHz, respectivement 74 kHz représentatives chacune de la valeur binaire 0 et 1 respectivement.
Il s'ensuit que lors d'une répétition, tous les bits sont émis de façon synchrone. Les porteuses 61 et 74 kHz ne peuvent toutefois pas être synchronisées. L'initiative de l'échange est due à l'heure actuelle au seul concentrateur. La réponse du circuit I.C.C. destinataire bénéficie, de la même manière que l'appel concentrateur - circuit I.C.C., de la répétition avec la même valeur de crédit de répétition. Pour des trames de données dont la durée est de l'ordre de la seconde et compte tenu d'un crédit de répétition initial de l'ordre de 3 ou 4, on peut estimer que la durée d'un échange de message de gestion entre le concentrateur et un circuit I.C.C. donné est de l'ordre de 10 à 12 secondes.

Pour une description plus détaillée des caractéristiques des signaux par courants porteurs, signaux CPL-BT, on pourra utilement se reporter à la norme européenne EN 50065-1.
En référence à la norme précitée, on indique simplement que le type de modulation utilisé des porteuses basses fréquences à 61 kHz et 74 kHz est la modulation SFSK, pour *Spread Frequency Shift Keying*, ce type de modulation pouvant être compris comme un mode de modulation FSK dont les raies spectrales sont suffisamment distantes l'une de l'autre pour éviter que la perturbation de l'une par un bruit ou parasite ne puisse pratiquement atteindre l'autre. Dans un tel cas, le récepteur traite la raie non perturbée comme s'il s'agissait d'une simple transmission en mode O-O-K pour *ON-OFF KEYING*, en langage anglo-saxon.
Ainsi, un un logique est représenté par la présence de la porteuse basse fréquence à 61 kHz et l'absence de la porteuse basse fréquence à 74 kHz, et un zéro logique par l'absence de la porteuse basse fréquence à 61 kHz et la présence de la porteuse basse fréquence à 74 kHz.

Le mode opératoire précité donne satisfaction. Toutefois, il présente une limitation manifeste, dans la mesure où l'équipement de lignes du réseau BT en concentrateurs étant essentiellement réservé à des lignes présentant une densité suffisante de clients abonnés, il n'est guère envisageable d'assurer une généralisation et une extension des prestations de services quelles que soient l'importance du réseau BT et la densité de clients abonnés sur ce réseau BT.

Le document US-A-4 749 992 décrit un dispositif dans lequel les voies CPL/radiofréquence et radiofréquence CPL comprennent un calculateur commun, lequel délivre des données numériques pour moduler un émetteur radiofréquence 42, pour l'émission RF, et un modulateur FM 44 ainsi qu'un oscillateur d'émission 46 pour l'émission CPL. Un récepteur RF 38 permet d'effectuer l'acquisition des données par un calculateur 40, par l'intermédiaire d'un système démodulateur 54 et d'un détecteur 56 qui délivre une information CPL numérique.
Ce dispositif apparaît complexe dans la mesure où il dispose de deux voies parallèles distinctes en l'absence de fréquences intermédiaires communes.

La présente invention a pour objet de remédier aux inconvénients précités par la mise en oeuvre d'un dispositif d'interfaçage d'une liaison bidirectionnelle courants porteurs basse tension CPL-BT /radiofréquence entre une ligne de distribution d'énergie électrique basse tension, permettant la transmission de signaux par courants porteurs, et l'espace radioélectrique de façon à permettre l'extension de la transmission de messages de gestion d'un réseau basse tension à un ou plusieurs réseaux basse tension et la généralisation et l'extension des prestations de services correspondantes.

Un autre objet de la présente invention est la mise en oeuvre d'un dispositif d'interfaçage d'une liaison bidirectionnelle CPL-BT /radiofréquence permettant la transmission synchrone des données transmises sous forme de courants porteurs d'un premier à un deuxième réseau BT, distinct ou non du premier réseau BT.

Le dispositif d'interfaçage d'une liaison bidirectionnelle courants porteurs basse tension CPL-BT /radiofréquence entre une ligne de distribution d'énergie basse tension, permettant la transmission de signaux courants porteurs, et l'espace radioélectrique, objet de la présente invention, est remarquable en ce qu'il comprend un circuit de couplage CPL-BT interconnecté à la ligne basse tension et permettant de délivrer, en réception, des premiers signaux représentatifs d'une information en réception des courants porteurs, une première voie, courants porteurs basse tension/ radiofréquence comprenant au moins des premiers circuits de transformation des premiers signaux représentatifs de l'information en réception des courants porteurs en un premier signal à fréquence intermédiaire modulé en amplitude par ces premiers signaux représentatifs de l'information en réception de ces courants porteurs et des premiers circuits de transposition en fréquence du premier signal à fréquence intermédiaire en un signal de modulation d'émission radiofréquence. Un dispositif de couplage et d'émission-réception aux premiers circuits de transposition en fréquence est interconnecté aux premiers circuits de transposition en fréquence et reçoit, d'une part, en émission, le signal de modulation d'émission radiofréquence pour effectuer l'émission d'un signal radiofréquence représentatif de l'information des courants porteurs, et, d'autre part, en réception, un signal radiofréquence de réception. Une deuxième voie, radiofréquence /courants porteurs basse tension est interconnectée au dispositif de couplage d'émission-réception et comprend au moins des deuxièmes circuits de transposition en fréquence du signal radiofréquence de réception en un deuxième signal à fréquence intermédiaire, de même fréquence que celle du premier signal à fréquence intermédiaire, et des deuxièmes circuits de transformation du deuxième signal à fréquence intermédiaire en deuxièmes signaux représentatifs d'une information en émission des courants porteurs. Les deuxièmes circuits de transformation sont interconnectés et délivrent les deuxièmes signaux représentatifs d'une information en émission des courants porteurs au circuit de couplage CPL-BT, pour transmission de cette information sous forme de courants porteurs sur la ligne basse tension.

Il trouve application à la gestion de réseaux de distribution d'énergie électrique basse tension, ainsi que, de manière plus générale, à la prestation de services de toute nature dans le domaine de la domotique.

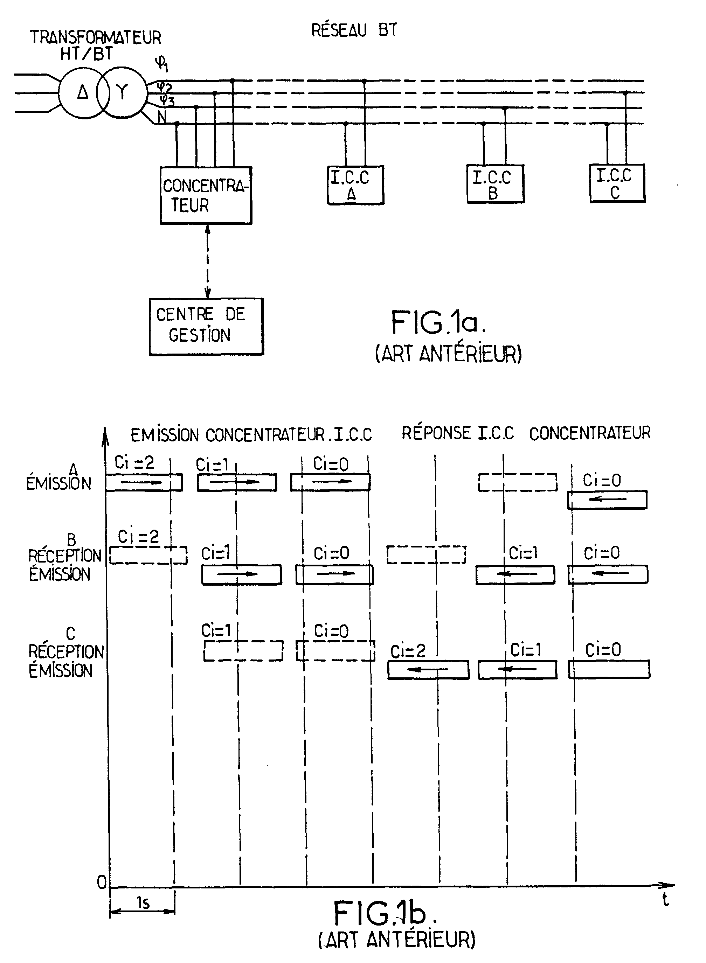

Il sera mieux compris à la lecture de la description ci-après, en liaison avec les dessins dans lesquels, outre les figures 1a et 1b relatives à l'art antérieur :
- la figure 2a représente, sous forme d'un schéma fonctionnel, un dispositif d'interfaçage d'une liaison bidirectionnelle courants porteurs basse tension /radiofréquence, objet de l'invention, dans un premier mode de réalisation ;
- la figure 2b représente, sous forme d'un schéma fonctionnel, un dispositif d'interfaçage d'une liaison bidirectionnelle courants porteurs basse tension /radiofréquence, objet de la présente invention, dans un deuxième mode de réalisation ;
- la figure 2c représente une variante simplifiée du deuxième mode de réalisation représenté en figure 2b ;
- la figure 3a représente un dispositif d'interfaçage conforme au premier mode de réalisation représenté en figure 2a, dans une variante de réalisation dans laquelle ce dispositif est configurable ;
- la figure 3b représente un dispositif d'interfaçage conforme au deuxième mode de réalisation représenté en figure 2b, dans une variante de réalisation dans laquelle ce dispositif est également configurable ;
- la figure 4 représente, à titre illustratif, un réseau de distribution d'énergie électrique basse tension, comportant différentes tranches de réseaux de distribution de hameaux, équipés de dispositifs d'interfaçage conformes à l'objet de la présente invention ;
- les figures 5a à 5d représentent différents états du réseau représenté en figure 4 lors de la transmission successive, par vagues, de messages par crédit de répétition ;
- la figure 5e représente un chronogramme général des trames ou messages émis sur le réseau représenté en figure 4 au cours des étapes successives représentées en figures 5a à 5d.

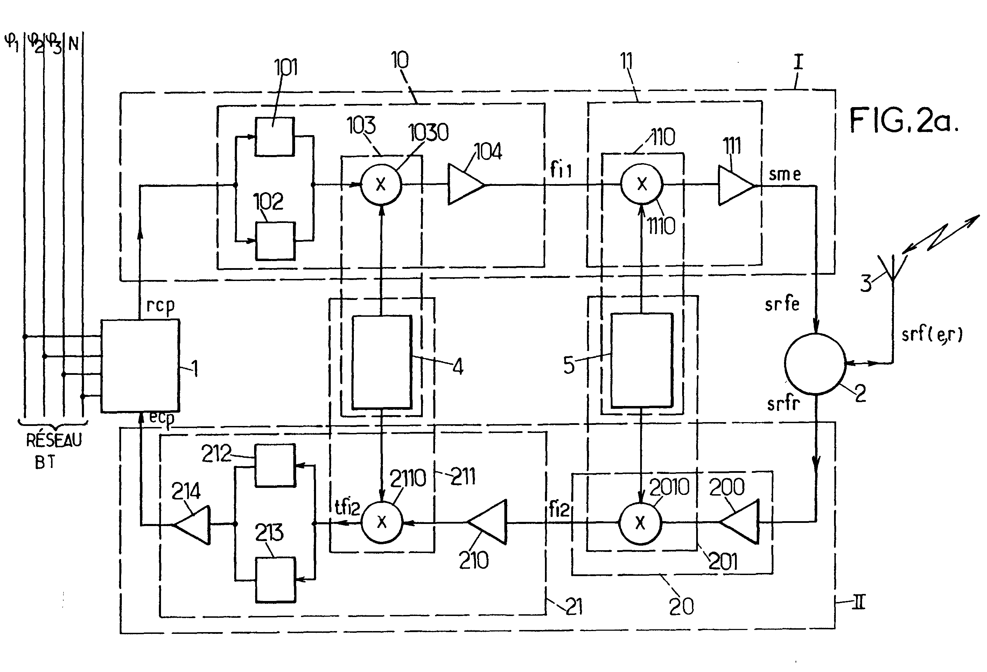

Une description plus détaillée du dispositif d'interfaçage d'une liaison bidirectionnelle courants porteurs basse tension CPL-BT /radiofréquence entre une ligne de distribution d'énergie électrique basse-tension, siège de la transmission de signaux par courants porteurs et l'espace radioélectrique, sera tout d'abord donnée, d'une part, au plan général, et, d'autre part, dans le cadre d'un premier mode de réalisation avantageux en liaison avec la figure 2a.

Ainsi que représenté sur la figure précitée, le dispositif d'interfaçage objet de la présente invention comprend un module 1 de couplage CPL-BT interconnecté à la ligne basse tension BT, ce module de couplage permettant de délivrer en réception des premiers signaux représentatifs d'une information en réception des courants porteurs se propageant sur la ligne basse tension BT. Les premiers signaux représentatifs d'une information en réception des courants porteurs sont notés rcp sur la figure 2a. De manière classique, on indique que le module 1 de couplage CPL-BT est un module de couplage disponible dans le commerce tel que le module de couplage intégré dans les circuits I.C.C précédemment mentionnés dans la description. A ce titre, le module de couplage 1 ne sera pas décrit en détail.

Outre le module de couplage CPL-BT 1 précité, le dispositif d'interfaçage selon l'invention comprend une première voie, désignée par voie courants porteurs basse tension /radiofréquence, cette voie étant notée I sur la figure 2a et comportant au moins un premier module 10 de transformation des premiers signaux représentatifs de l'information en réception rcp des courants porteurs en un premier signal à fréquence intermédiaire, noté fi₁ sur la figure précitée. D'une manière générale et afin de faciliter la lecture de la description en liaison avec les dessins, et en particulier la figure 2a, on indique que tous les éléments portant une référence dont le premier chiffre commence par 1 mais de rang supérieur à 1, appartiennent à la première voie.

Le premier signal à fréquence intermédiaire fi₁ est modulé en amplitude par les premiers signaux représentatifs de l'information en réception des courants porteurs rcp.

En outre, la première voie I comporte également un premier module 11 de transposition en fréquence du premier signal à fréquence intermédiaire fi₁ en un signal de modulation d'émission radiofréquence, noté sme sur la figure 2a précitée.

La première voie précitée I est en outre couplée à un dispositif 2 de couplage et d'émission-réception radiofréquence, ce dispositif 2 de couplage et d'émission-réception radiofréquence étant en fait interconnecté au premier module 11 de transposition en fréquence afin de recevoir, d'une part, en émission, le signal de modulation d'émission radiofréquence sme précité délivré par le premier module 11 de transposition en fréquence, afin d'effectuer ainsi l'émission d'un signal radiofréquence, noté srfe, représentatif de l'information des courants porteurs.

En outre, ainsi que symbolisé par la double flèche à l'un des ports du dispositif 2 de couplage d'émission-réception radiofréquence, celui-ci reçoit d'autre part, en réception, un signal radiofréquence de réception, noté srfr, le signal radiofréquence représentatif, d'une part, à l'émission de l'information des courants porteurs et, d'autre part, en réception d'une information de réception radiofréquence, étant, pour la commodité de la notation, noté globalement srf(e,r).

Ainsi qu'on l'a en outre représenté en figure 2a, le dispositif d'interfaçage, objet de la présente invention, comprend en outre, interconnectée au dispositif 2 de couplage et d'émission-réception précédemment cité, une deuxième voie, désignée par voie radiofréquence/ courants porteurs basse tension, cette deuxième voie étant notée II et recevant le signal radiofréquence de réception srfr précédemment mentionné.

La deuxième voie II comporte au moins, ainsi que représenté sur la figure 2a, un deuxième module 20 de transposition en fréquence du signal radiofréquence de réception srfr en un deuxième signal à fréquence intermédiaire, noté fi₂, ce deuxième signal à fréquence intermédiaire ayant de préférence la même valeur de fréquence que celle du premier signal à fréquence intermédiaire fi₁.

En outre, la deuxième voie II comprend un deuxième module 21 de transformation du deuxième signal à fréquence intermédiaire fi₂ en deuxièmes signaux représentatifs d'une information en émission des courants porteurs, ces deuxièmes signaux étant notés ecp sur la figure 2a.

Bien entendu, le deuxième module 21 de transformation du deuxième signal à fréquence intermédiaire est interconnecté au module 1 de couplage CPL-BT pour délivrer à ce dernier le deuxième signal représentatif de l'information en émission des courants porteurs ecp précédemment cité, afin de permettre la transmission de cette information sous forme de courants porteurs par le module de couplage CPL-BT 1 sur la ligne basse tension BT. On indique également que tous les éléments constitutifs de la deuxième voie II portent une référence dont le premier chiffre commence par le chiffre 2 et dont le rang est supérieur à 2.

La constitution effective de la première voie I et de la deuxième voie II, ainsi que de leurs modules constitutifs, premier module 10 de transformation des premiers signaux représentatifs de l'information en réception des courants porteurs, premier module 11 de transposition en fréquence et de la deuxième voie II et de ses éléments constitutifs, deuxième module 20 de transposition en fréquence, et deuxième module 21 de transformation du deuxième signal à fréquence intermédiaire en deuxièmes signaux représentatifs d'une information en émission des courants porteurs, sera maintenant donnée en liaison avec la même figure 2a dans le cadre d'un premier mode de réalisation avantageux non limitatif.

Ce mode de réalisation sera décrit dans le cas où, à titre d'exemple, le module de couplage CPL-BT 1 délivre les premiers signaux représentatifs de l'information en réception des courants porteurs rcp à l'alternat basse tension sous forme d'un premier, puis d'un deuxième signal basse fréquence de fréquence centrale distincte, c'est-à-dire les signaux à la fréquence de 61 kHz et 74 kHz respectivement, ainsi que mentionné précédemment dans la description.

Ainsi qu'on l'observera sur la figure 2a précitée, le premier module 10 de transformation des premiers signaux représentatifs de l'information en réception des courants porteurs rcp peut comporter avantageusement un premier 101 et un deuxième 102 circuit de filtrage passe-bande de réception. Ces circuits de filtrage sont connectés en parallèle et centrés chacun sur la fréquence centrale du premier et du deuxième signal basse fréquence respectivement, c'est-à-dire sur la fréquence 61 kHz et 74 kHz.

Connecté en cascade avec les circuits de filtrage 101 et 102 connectés en parallèle précédemment cités, un circuit 103 de transposition en fréquence en réception est prévu, ce circuit 103 permettant de délivrer le premier signal à fréquence intermédiaire fi₁. Dans un mode de réalisation non limitatif, on indique que le circuit 103 de transposition en fréquence en réception délivre en fait le premier signal à fréquence intermédiaire fil par l'intermédiaire d'un circuit amplificateur 104 permettant d'ajuster le niveau du premier signal à fréquence intermédiaire fi₁.

En outre, ainsi que représenté sur la même figure 2a précitée, le deuxième module 21 de transformation du deuxième signal à fréquence intermédiaire fi₂ comporte avantageusement, dans le mode de réalisation représenté en figure 2a, un circuit 211 de transposition en fréquence en émission, ce circuit de transposition en fréquence en émission étant connecté au deuxième module 20 de transposition en fréquence du signal radiofréquence de réception srfr pour recevoir ainsi le deuxième signal à fréquence intermédiaire fi₂. Le circuit 211 de transposition en fréquence en émission délivre ainsi, à partir du deuxième signal à fréquence intermédiaire fi₂, un deuxième signal à fréquence intermédiaire transposé, noté tfi₂ sur la figure 2a. Dans un mode de réalisation et d'exécution avantageux effectif, on indique toutefois que le circuit 211 de transposition en fréquence en émission reçoit le deuxième signal à fréquence intermédiaire fi₂ par l'intermédiaire d'un amplificateur 210, lequel bien entendu permet, de manière analogue à l'amplificateur 104 de la première voie, d'ajuster le niveau du deuxième signal à fréquence intermédiaire fi₂ effectivement délivré au circuit de transposition en fréquence en émission 211.

Le circuit de transposition en fréquence à l'émission 211 est lui-même suivi, ainsi que représenté sur la figure 2a, par un premier 212 et un deuxième 213 circuit de filtrage passe-bande d'émission, ces circuits de filtrage étant connectés en parallèle de manière analogue aux filtres 101 et 102 de la première voie et centrés chacun sur l'une respectivement l'autre des fréquences centrales du premier et du deuxième signal basse-fréquence à 61 kHz et 74 kHz. Le premier 212 et le deuxième 213 circuit de filtrage passe-bande d'émission délivrent alors les deuxièmes signaux représentatifs d'une information en émission des courants porteurs ecp, ces signaux étant centrés sur l'une et l'autre des fréquences centrales précitées et délivrés au module de couplage CPL-BT 1 par l'intermédiaire d'un amplificateur 214 par exemple.

Dans le cadre de la description des éléments constitutifs de la première respectivement de la deuxième voie, on indique que les amplificateurs tels que amplificateur 104, 210 et 214 ont pour fonction, d'une part, d'assurer une amplification adéquate des signaux transmis et, d'autre part, d'assurer un découplage et une séparation des différents étages conformément aux notions classiques dans la technique du changement de fréquence.

En ce qui concerne le circuit de transposition en fréquence en réception 103 et le circuit de transposition en fréquence en émission 211, on indique, selon un mode de réalisation particulièrement avantageux du dispositif d'interfaçage objet de la présente invention, que ces circuits comportent chacun un circuit de changement de fréquence 1030, respectivement 2110, et qu'ils comportent en outre un oscillateur commun portant la référence 4 sur la figure 2a.

Pour des raisons de commodité de réalisation, d'une part, et de stabilité en fréquence des différents signaux obtenus par changement de fréquence précédemment mentionnés dans la description, d'autre part, on indique également que le premier module 11 de transposition en fréquence du premier signal à fréquence intermédiaire fi₁ et le deuxième module 20 de transposition en fréquence du signal radiofréquence de réception srfr précédemment mentionnés dans la description sont conçus et organisés selon une architecture analogue à celle des modules 10 de transformation des premiers signaux représentatifs de l'information en réception des courants porteurs et 21 de transformation du deuxième signal à fréquence intermédiaire fi₂ en deuxièmes signaux représentatifs d'une information en émission des courants porteurs ecp précités.

En conséquence, ainsi qu'on l'observera sur la figure 2a précitée, on indique que le premier module 11 de transposition en fréquence du premier signal à fréquence intermédiaire fil en un signal de modulation d'émission radiofréquence comporte avantageusement un circuit 110 de transposition en fréquence recevant le premier signal à fréquence intermédiaire fi₁ et délivrant, par exemple par l'intermédiaire d'un amplificateur 111, le signal de modulation d'émission radiofréquence sme précédemment cité dans la description.

De même, le deuxième module 20 de transposition en fréquence du signal radiofréquence de réception srfr en un deuxième signal à fréquence intermédiaire fi₂ comporte avantageusement un circuit 201 de transposition en fréquence recevant le signal radiofréquence de réception srfr par l'intermédiaire d'un amplificateur 200 par exemple et délivrant le deuxième signal à fréquence intermédiaire fi₂ précédemment mentionné.

De même que dans le cas des circuits de transposition en fréquence 103 et 211, on indique que les circuits de transposition en fréquence 110 et 201 comportent respectivement un circuit de changement de fréquence, portant la référence 1110 respectivement 2010 ainsi qu'un oscillateur local commun, portant la référence 5, délivrant un même signal de changement de fréquence aux circuits de changement de fréquence proprement dits 1110 et 2010.

Enfin, on indiquera, ainsi que représenté sur la figure 2a, que le circuit de couplage 2 de la première voie I et de la deuxième voie II est interconnecté à une antenne d'émission-réception 3, laquelle permet d'émettre, respectivement de recevoir, le signal radiofréquence d'émission et le signal radiofréquence de réception notés srf(er). Le circuit de couplage 2 peut être réalisé sous forme d'un circuit dit de type Té magique.

En ce qui concerne le mode opératoire du dispositif d'interfaçage tel que représenté en figure 2a, on indique qu'un tel dispositif permet une transparence quasi-totale vis-à-vis de l'information véhiculée par les courants porteurs. Cette qualité de transparence permet d'obtenir une retransmission en temps réel de toute trame véhiculée par les courants porteurs ainsi qu'il sera décrit ultérieurement dans la description.

Le dispositif d'interfaçage objet de la présente invention permet ainsi, grâce à un choix et à une mise en oeuvre de changement de fréquence adaptée, de transformer les signaux basse fréquence obtenus par modulation SFSK sur les courants porteurs CPL-BT en signaux dans une bande UHF à 433 MHz par exemple. Dans un mode de réalisation spécifique, le premier et le deuxième signal à fréquence intermédiaire avaient pour fréquence la valeur : fi₁ = fi₂ = 20,4 MHz.

Le dispositif d'interfaçage tel que représenté en figure 2a donne satisfaction. En particulier, le choix et la mise en oeuvre d'oscillateurs locaux communs 4 et 5, lorsque le dispositif d'interfaçage objet de la présente invention comprend deux étages de changement de fréquence, tant sur la voie de réception, première voie, que sur la voie d'émission, deuxième voie, permet d'obtenir une stabilité en fréquence satisfaisante, alors que le temps de commutation, c'est-à-dire le temps d'établissement de la porteuse dans le sens de la réception des courants porteurs CPL/émission radio et le temps d'établissement en émission courants porteurs radio/CPL, peut être rendu très inférieur à la durée d'un bit, c'est-à-dire à 1/300 de seconde.

Pour des signaux dont la largeur de bande est de l'ordre de 4 kHz autour des fréquences centrales, c'est-à-dire des valeurs 61 kHz et 74 kHz précitées, le temps d'établissement est de l'ordre de 250 µs.

On rappelle que le caractère de transparence du dispositif d'interfaçage objet de la présente invention vis-à-vis de l'information transmise, permet de s'affranchir de tous les problèmes de codage spécifiques de la transmission radio.

Dans le premier mode de réalisation du dispositif d'interfaçage objet de la présente invention tel que décrit en figure 2a, on indique que ce mode de réalisation a été décrit avec deux étages de changement de fréquence par voie, première voie et deuxième voie, mais que toutefois, le nombre d'étages de changement de fréquence peut être supérieur sans nuire aucunement au caractère de transparence recherché vis-à-vis de l'information transmise. Lorsque le nombre d'étages de changement de fréquence est égal à deux dans chacune des voies, première et deuxième voie précitées, on indique à titre d'exemple non limitatif que lorsque le signal radiofréquence d'émission ou de réception correspond à une fréquence porteuse de 433 MHz, la valeur commune pour le premier signal à fréquence intermédiaire fi₁ et le deuxième signal à fréquence intermédiaire fi₂ peut être prise égale à la valeur 20,4 MHz précitée.

Enfin, on comprendra, en ce qui concerne le premier mode de réalisation représenté en figure 2a, que la mise en oeuvre d'oscillateurs locaux communs 4 et 5 pour les étages de changement de fréquence de la première voie et de la deuxième voie, permet de résoudre de manière satisfaisante le problème de la stabilité des oscillateurs locaux dans le cadre des opérations de changement de fréquence dans la mesure où le problème de stabilisation est ainsi simplifié de manière pratique. En effet, pour une stabilité de l'ordre de 1% de la fréquence d'oscillation délivrée par les oscillateurs locaux précités, on obtient un fonctionnement global satisfaisant de l'ensemble, alors que les dispositifs classiques permettant la stabilisation de la fréquence d'oscillation de ces oscillateurs peuvent être ainsi relativement réduits en raison du caractère commun de ces oscillateurs pour la première et la deuxième voie respectivement.

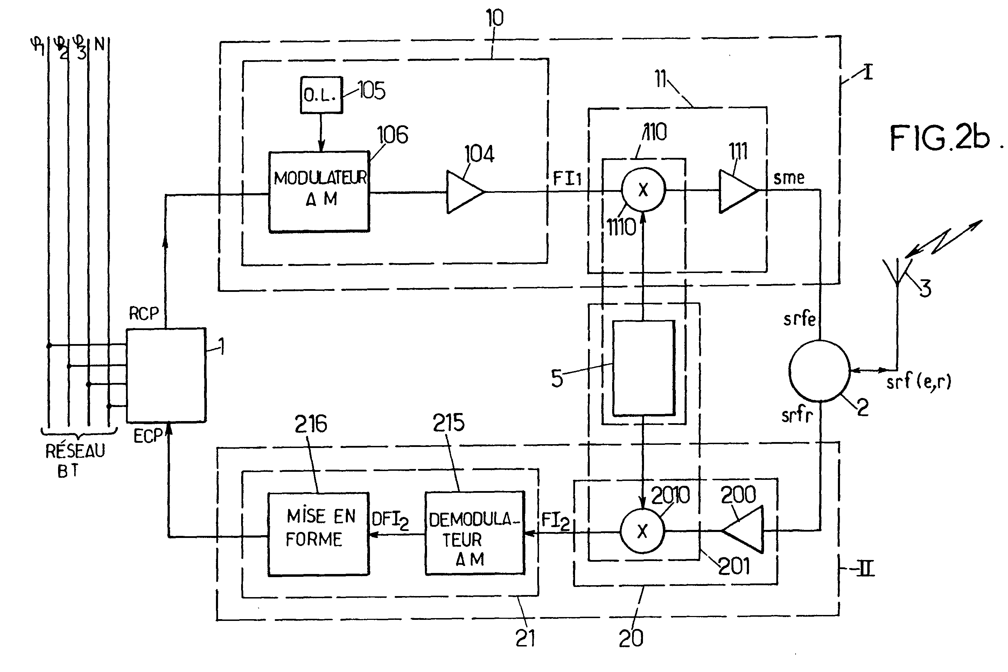

Un deuxième mode de réalisation du dispositif d'interfaçage, objet de la présente invention, sera maintenant décrit en liaison avec la figure 2b. Dans ce mode de réalisation, les différents signaux portent les mêmes désignations que dans le cas du premier mode de réalisation décrit en liaison avec la figure 2a, dans la mesure où ces signaux présentent des fonctions analogues à ceux de la figure précitée. Toutefois, ces différents signaux portent des références en lettres majuscules en raison du fait que, bien qu'ayant la même désignation et la même fonction ou une fonction analogue à celle des signaux de la figure 2a, leur valeur ou leur structure peut être différente.

Le deuxième mode de réalisation, conformément à la figure 2b, est maintenant décrit dans le cas où le module de couplage CPL-BT 1 délivre les premiers signaux représentatifs de l'information en réception des courants porteurs RCP à l'alternat basse tension sous forme d'un premier, puis d'un deuxième signal logique à deux valeurs complémentées. On comprend ainsi que les premiers signaux représentatifs de l'information en réception des courants porteurs RCP correspondent en fait aux signaux basse fréquence 61 kHz et 74 kHz précédemment mentionnés dans la description, après détection par exemple et mise en forme pour délivrer les signaux logiques de valeurs complémentées précitées. Le traitement correspondant de détection et de mise en forme ne sera pas décrit en détail car il correspond à un traitement de type classique parfaitement connu de l'homme de l'art.

La première voie I et la deuxième voie II jouant le même rôle dans le deuxième mode de réalisation, on indique, ainsi que représenté sur la figure 2b, que le premier module 10 de transformation comporte un circuit 105 générateur d'une onde sous-porteuse, ce circuit étant constitué par exemple par un oscillateur local délivrant une onde sous-porteuse à 4 kHz par exemple, et un circuit 106 de modulation en amplitude, recevant, d'une part, l'onde sous-porteuse délivrée par le circuit générateur 105 et, d'autre part, les premiers signaux représentatifs de l'information en réception des courants porteurs RCP précédemment cités dans la description. Le circuit 106 modulateur d'amplitude délivre alors une onde sous-porteuse de réception modulée en amplitude, par exemple par l'intermédiaire d'un amplificateur 104, cette onde sous-porteuse de réception modulée en amplitude jouant le rôle du premier signal à fréquence intermédiaire fi₁ et portant pour cette raison la référence FI₁.

De même, le deuxième module 21 de transformation du deuxième signal à fréquence intermédiaire FI₂ comporte avantageusement un circuit 215 démodulateur d'amplitude recevant le deuxième signal à fréquence intermédiaire FI₂, lequel correspond à une onde sous-porteuse modulée en amplitude d'émission, le circuit démodulateur 215 délivrant une onde sous-porteuse démodulée en amplitude d'émission, notée DFI₂. Le circuit démodulateur d'amplitude 215 est suivi d'un circuit 216 de mise en forme recevant l'onde sous-porteuse démodulée en amplitude d'émission DFI₂ et délivrant au module de couplage CPL-BT 1 les deuxièmes signaux représentatifs des courants porteurs à l'alternat basse tension, signaux notés ECP, sous forme d'un signal logique à deux valeurs complémentées pour réémission des informations reçues par voie radiofréquence sous forme de courants porteurs sur le réseau BT.

En ce qui concerne le premier module 11 de transposition en fréquence et le deuxième module 20 de transposition en fréquence de la première et de la deuxième voie I, II, on indique que ces modules peuvent être identiques à ceux du premier mode de réalisation représenté en figure 2a et qu'en conséquence, les éléments constitutifs de ces derniers portent la même référence.

En ce qui concerne le deuxième mode de réalisation du dispositif d'interfaçage, objet de la présente invention, on indique que celui-ci présente l'avantage d'une mise en oeuvre à partir de matériel standard normalement disponible dans le commerce. On indique en outre que l'onde sous-porteuse de réception modulée en amplitude FI₁ et le deuxième signal à fréquence intermédiaire FI₂ ont même valeur de fréquence, c'est-à-dire 4 kHz, en raison de la structure d'oscillateur local commun 5 à la première et à la deuxième voie. En conséquence, le démodulateur AM 215 peut être constitué par tout dispositif de détection ou d'écrêtage constituant en fait filtre passe-bas de fréquence de coupure de l'ordre de 2 kHz par exemple, ce qui permet de délivrer un signal détecté correspondant à l'enveloppe du deuxième signal à fréquence intermédiaire FI₂, ce signal détecté n'étant autre que le signal constitutif de l'onde sous-porteuse démodulée en amplitude d'émission DFI₂.

En ce qui concerne le circuit de mise en forme 216, on indique simplement que celui-ci, à partir de l'onde sous-porteuse démodulée en amplitude d'émission DFI₂, peut consister en un jeu de bascules bistables présentant une absence de rebondissement convenable afin d'assurer la transmission des deuxièmes signaux représentatifs des courants porteurs à l'alternat basse-tension ECP sous forme du signal logique à deux valeurs complémentées précité.

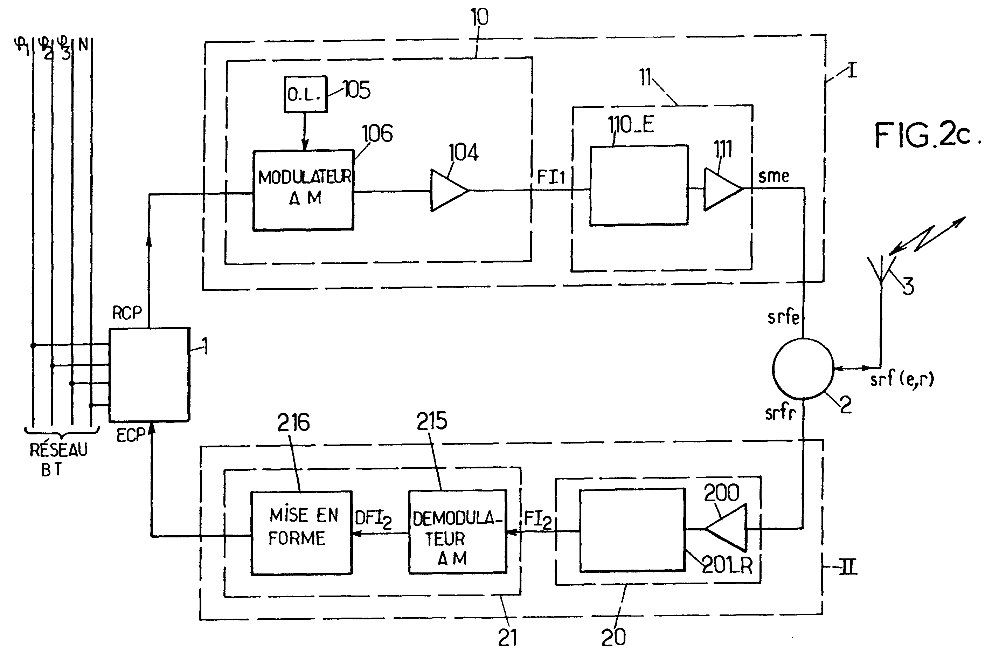

Dans une version simplifiée du deuxième mode de réalisation, telle que représentée en figure 2c, le premier module 11 de transposition en fréquence et le deuxième module 20 de transposition en fréquence peuvent être remplacés par un émetteur à modulation de fréquence 110-E, respectivement un récepteur à modulation de fréquence 201-R, l'oscillateur local commun 5 étant supprimé. L'émetteur FM 110-E reçoit le signal FI₁ comme signal de modulation de fréquence et le récepteur 201-R délivre le signal FI₂ issu de la réception FM. Ce mode de réalisation simplifié permet de s'affranchir totalement des problèmes de stabilité en fréquence du fait de la suppression de l'oscillateur local commun.

Du point de vue du fonctionnement général du dispositif d'interfaçage objet de la présente invention, on indique que, tant dans le premier mode que dans le deuxième mode de réalisation représentés en figures 2a, 2b et 2c, ces modes de réalisation peuvent opérer à partir d'une gestion de la commutation de l'émission du signal radiofréquence srfe à la réception du signal radiofréquence srfr, et réciproquement, à partir du module 1 de couplage CPL-BT précédemment décrit dans le cadre des deux modes de réalisation précités. On comprend en particulier qu'à partir d'un mode dit mode veille dans lequel aucun courant porteur n'est présent sur le réseau BT alors que, en outre, aucun signal radiofréquence srfr à la réception n'est présent, le dispositif d'interfaçage objet de la présente invention se trouvant alors en situation analogue à une situation d'état de veille. La présence de courants porteurs sur le réseau BT, respectivement la présence d'un signal radiofréquence de réception srfr et des deuxièmes signaux représentatifs d'une information en émission des courants porteurs, signaux ecp dans le cas du premier mode de réalisation, signaux ECP dans le cas du deuxième mode de réalisation, permet au module 1 de couplage CPL-BT de gérer le passage de l'un à l'autre état sur critère de première apparition de l'un ou l'autre des signaux.

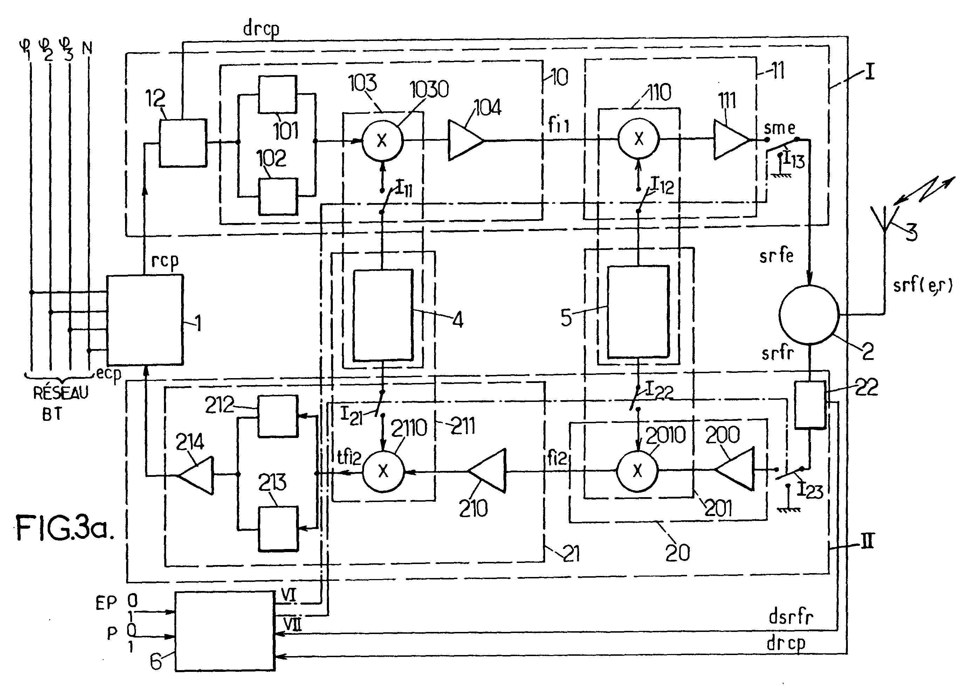

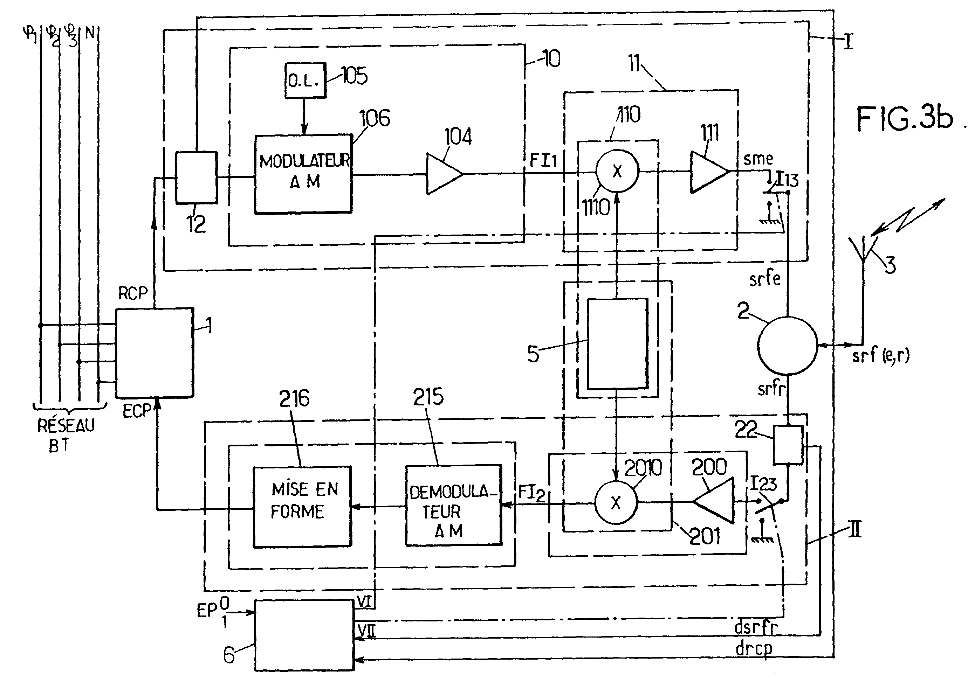

Toutefois, ce mode opératoire présente des inconvénients tels qu'un manque de souplesse manifeste ainsi qu'un risque de blocage ou de saturation du dispositif d'interfaçage objet de la présente invention. Afin de remédier à l'inconvénient précité, on comprend, ainsi que représenté en figures 3a et 3b relativement au premier, respectivement au deuxième mode de réalisation du dispositif d'interfaçage objet de la présente invention, que celui-ci peut avantageusement comporter un module 6 de gestion de la première I et de la deuxième voie II, ce module de gestion permettant d'assurer en fait la commutation de l'une ou l'autre des voies précitées entre au moins un état de veille correspondant à l'état précédemment décrit dans la description, un état de réception et un état d'émission radio, ainsi qu'il sera décrit ci-après en liaison avec les figures 3a et 3b. On comprend en particulier que ce module de gestion 6 permet d'assurer une configuration ou une programmation particulièrement souple et adaptée du dispositif d'interfaçage objet de la présente invention parmi les différents états possibles de celui-ci.

Ainsi qu'on l'a représenté en particulier en figure 3a relativement au premier mode de réalisation, dans ce cas, il peut être prévu, au niveau de la première voie I, un circuit détecteur 12 des premiers signaux représentatifs d'une information en réception des courants porteurs rcp, ce circuit détecteur 12 délivrant un signal de détection correspondant, désigné par signal drcp.

De même, la deuxième voie II comporte un circuit de détection 22 du signal radiofréquence de réception srfr. Ce circuit de détection 22 délivre un signal de détection correspondant, désigné par signal dsrfr. Les signaux de détection dsrfr et drcp sont alors délivrés au module de gestion 6 précédemment mentionné.

Ainsi qu'on l'a en outre représenté sur la même figure 3a, des circuits de commande et de contrôle de la première et de la deuxième voie I, II, peuvent alors être prévus, ces circuits étant représentés pour la première voie I par des interrupteurs I₁₁, I₁₂ et I₁₃, et pour la deuxième voie II, I₂₃, I₂₂ et I₂₁. Les interrupteurs I₁₁, I₂₁ peuvent avantageusement être montés sur la voie délivrant le signal d'oscillateur local délivré par l'oscillateur local 4 aux circuits de changement de fréquence 1030 respectivement 2110, les interrupteurs I₁₂ et I₂₂ peuvent avantageusement être montés sur les voies délivrant les signaux d'oscillateur local de l'oscillateur local 5 aux circuits de changement de fréquence 1110, respectivement 2010, et des circuits interrupteurs I₁₃ et I₂₃ peuvent être avantageusement montés en commutation dans la première voie I en entrée du signal radiofréquence d'émission srfe au niveau du circuit de couplage 2, respectivement en sortie du signal radiofréquence de réception srfr du circuit de couplage 2. Ainsi que représenté sur la figure 3a précitée, l'interrupteur I₁₃ peut avantageusement être commandé en commutation entre la sortie de l'amplificateur 111, c'est-à-dire en fait la sortie de la première voie I, et la tension de référence du dispositif, alors que l'interrupteur I₂₃ peut être commandé en commutation entre l'entrée de l'amplificateur 200, c'est-à-dire l'entrée de la deuxième voie II et la tension de référence du dispositif. Bien que les interrupteurs précités soient représentés sous forme d'interrupteurs électromécaniques pour la compréhension des fonctions correspondantes, on comprend que ces différents interrupteurs peuvent avantageusement être réalisés par des interrupteurs électroniques commandés. La commande des interrupteurs précités peut alors avantageusement être réalisée à partir du module de gestion 6 pour assurer la commande et le contrôle de la première voie I et de la deuxième voie II respectivement. Dans ce but, le module de gestion 6 peut avantageusement recevoir deux variables binaires, dites de programmation ou de configuration, les variables EP, P respectivement, susceptibles d'occuper chacune deux valeurs binaires 0 ou 1.

La table de vérité des variables binaires précitées est donnée selon le premier tableau :

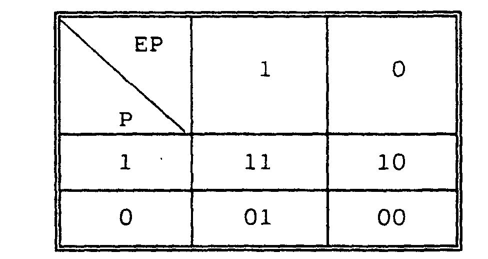

et la commande des interrupteurs I₁₁, I₁₂, I₁₃ respectivement I₂₁, I₂₂, I₂₃ peut alors être réalisée selon la table de vérité ci-après:

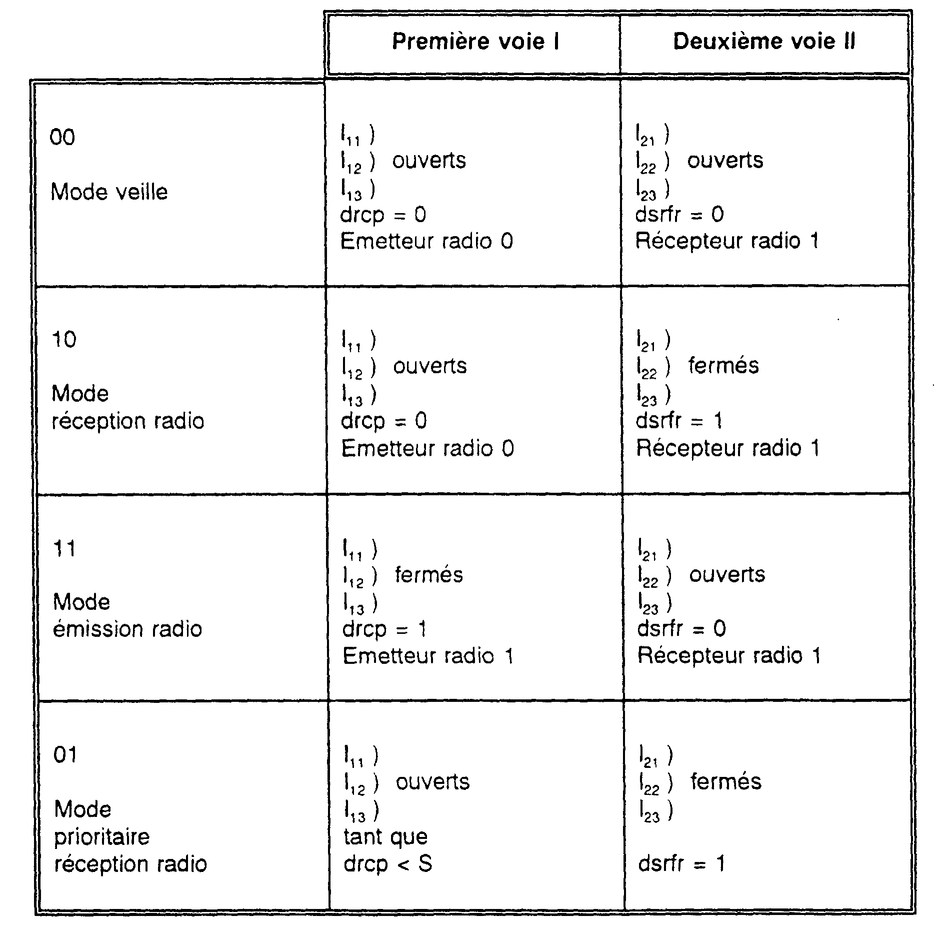

Dans les deux tableaux précités, on indique qu'en fonction de la valeur des variables binaires EP et P, il est possible d'atteindre quatre états significatifs du dispositif d'interfaçage objet de la présente invention, un premier, dit état de veille absolu, obtenu pour la valeur 00 de la combinaison des variables EP et P, cet état de veille absolu ou mode veille correspondant en fait à l'état de veille mentionné précédemment dans la description lors de la l'absence de signal radio srfr et de l'absence de signal de courants porteurs rcp. Les états correspondants des interrupteurs précités ainsi que la valeur logique des signaux de détection dsrfr et drcp sont donnés dans la deuxième table de vérité précédemment introduite dans la description.

La valeur 10 de combinaison des variables EP et P correspond à un mode de réception radio pour lequel il existe un signal srfr en l'absence de réception de signaux de courants porteurs, le signal drcp étant à la valeur 0. L'état des interrupteurs correspondants est donné dans la deuxième table de vérité.

La combinaison des valeurs binaires EP et P à la valeur 11 correspond à un mode d'émission pendant une durée correspondant à au moins une trame par émission radio, le signal drcp est égal à 1 et les interrupteurs de la première voie I sont alors fermés pour assurer la fonction d'émission. Les états correspondants de la deuxième voie II sont également donnés dans la deuxième table de vérité.

Pour la valeur 01 de la combinaison des variables EP et P, selon un aspect particulièrement avantageux du dispositif d'interfaçage objet de la présente invention, celui-ci peut alors être configuré dans un mode dit prioritaire dans lequel la réception radio est en fait privilégiée, compte tenu de la différence des seuils de sensibilité entre le récepteur radio et le module de couplage 1 CPL-BT à leurs signaux respectifs. On comprend ainsi que dans le mode prioritaire réception radio précédemment défini, le signal drcp, signal de détection des courants porteurs en réception, peut alors être pris dans sa valeur analogique et comparé à une valeur de seuil S, les interrupteurs I₁₁, I₁₂, I₁₃ de la première voie I étant alors maintenus ouverts tant que la valeur d'amplitude du signal drcp est inférieure à cette valeur de seuil déterminée, les interrupteurs I₂₁, I₂₂ et I₂₃ étant alors maintenus fermés et le signal dsrfr étant maintenu à la valeur 1 arbitrairement.

On comprend en particulier que compte tenu des différents modes, mode veille, mode réception radio, mode émission radio et mode prioritaire réception radio, les signaux drcp et dsrfr peuvent alors être combinés au niveau du module de commutation 6 avec les signaux logiques EP et P pour délivrer les signaux de commande V1 et V2 symbolisés par des commandes électromécaniques sur les figures 3a et 3b, pour commander l'ouverture et/ou la fermeture appropriée des interrupteurs I₁₁, I₁₂, I₁₃ de la première voie I, respectivement I₂₁, I₂₂, I₂₃ de la deuxième voie II.

IL en est de même pour le mode de réalisation de la figure 3b.

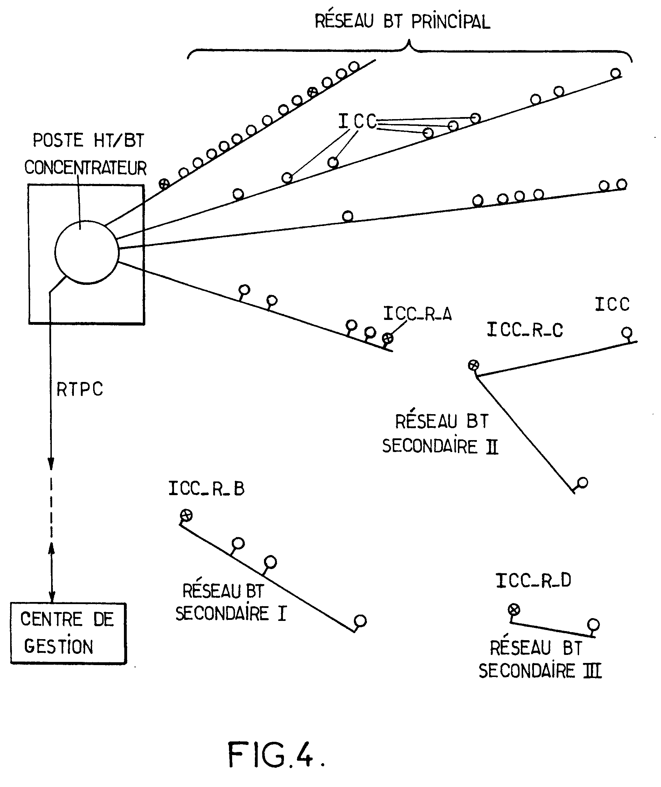

Une description plus détaillée d'un mode opératoire et d'une utilisation d'un ensemble de dispositifs d'interfaçage d'une liaison bidirectionnelle courants porteurs basse tension /radiofréquence sur un réseau basse tension spécifique, sera maintenant donnée en liaison avec la figure 4 et les figures 5a à 5e.

Sur la figure 4 précitée, on a représenté un réseau de distribution BT comprenant un réseau principal interconnecté à un poste HT/BT muni d'un concentrateur relié par une liaison du réseau téléphonique public commuté RTPC à un centre de gestion. Le réseau de distribution BT est réputé comprendre un réseau principal constitué de quatre branches directement interconnectées au poste HT/BT et par exemple trois réseaux secondaires BT, notés I, II et III, ces réseaux BT secondaires pouvant consister en des réseaux de hameaux isolés par exemple. Par définition, ces réseaux secondaires ne sont pas interconnectés au poste HT/BT muni du concentrateur représenté en figure 4, mais sont au contraire interconnectés à d'autres postes HT/BT non représentés car non munis de concentrateurs par définition. Les branches du réseau BT principal ont chacune une longueur de l'ordre de 1000 mètres au maximum. Elles sont équipées d'un certain nombre de circuits I.C.C et le concentrateur transmet vers ces circuits I.C.C des trames de données au débit de 300 bits par seconde en fonctionnement à l'alternat, ainsi que mentionné précédemment dans la description.

Ainsi qu'on l'a représenté en outre en figure 4, la branche inférieure du réseau BT principal est en outre munie d'un dispositif d'interfaçage conforme à l'objet de la présente invention, ce dispositif d'interfaçage étant noté pour la commodité I.C.C-R-A et étant bien entendu muni d'une fonction d'interfaçage bidirectionnel radio.

Il en est de même en ce qui concerne le réseau BT secondaire I, muni d'un dispositif d'interfaçage noté I.C.C-R-B, et du réseau BT secondaire II muni lui-même d'un dispositif d'interfaçage noté I.C.C-R-C. Un troisième réseau BT secondaire III est lui-même muni d'un dispositif d'interfaçage noté I.C.C-R-D. Chaque dispositif d'interfaçage des réseaux BT secondaires est en vision directe du dispositif d'interfaçage du réseau principal. Dans ce but, chaque dispositif d'interfaçage peut alors être muni d'une antenne de type Yagui constituant l'antenne 3 représentée dans les modes de réalisation précédemment décrits. Pour une fréquence d'émission de 433 MHz, la puissance des émetteurs radio permettant l'émission du signal srfe n'excède pas 0,1 watt. L'antenne d'émission-réception du dispositif d'interfaçage I.C.C-R-A du réseau BT principal peut au contraire présenter des qualités d'omnidirectionnalité. Les circuits I.C.C sont représentées par un cercle évidé et les dispositifs d'interfaçage I.C.C-R-A, B, C, et D sont représentés par un cercle muni d'une croix. D'une manière générale, les dispositifs d'interfaçage précités, conformes à l'objet de la présente invention, sont montés par exemple sur un poteau support des conducteurs du réseau électrique BT correspondant.

La transmission des messages ou trames de données s'effectue selon le processus précédemment décrit par la description à partir du concentrateur sur le réseau BT principal avec répétition par vagues selon le processus de crédit d'émission précédemment décrit. Lors de l'atteinte par les trames précitées sur la branche inférieure du réseau BT principal du dispositif d'interfaçage I.C.C-R-A, objet de la présente invention, celui-ci émet pratiquement en synchronisme, c'est-à-dire aux durées de commutation près de l'une ou l'autre voie, sous forme de message radio, la trame correspondante vers les interfaces des réseaux BT secondaires I.C.C-R-B-C, respectivement D.

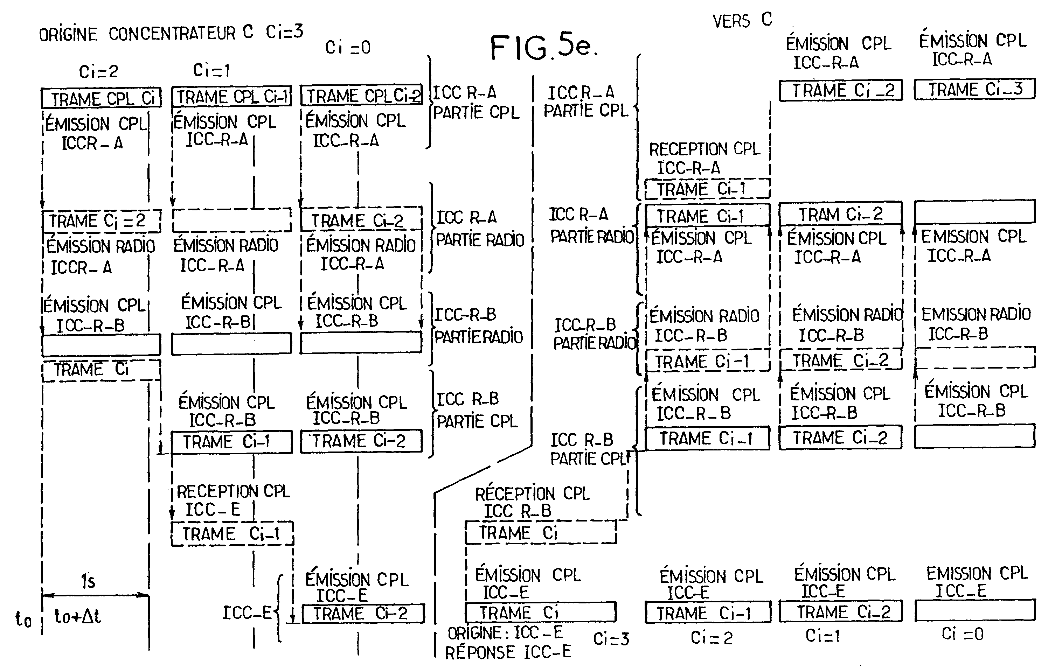

Une description plus détaillée de l'évolution du processus de transmission des trames précitées, ces trames ayant une durée de l'ordre de une seconde, sera donnée en liaison avec les figures 5a à 5d et 5e, dans laquelle, afin de ne pas surcharger le dessin, la branche supérieure du réseau BT principal a été supprimée.

Sur la figure 5a, le concentrateur du poste HT/BT effectue l'émission initiale d'une trame de données avec un crédit Ci = 3. Les interfaces I.C.C, représentées par un cercle noirci, du réseau BT principal reçoivent correctement la trame précitée avec un crédit correspondant. Les interfaces I.C.C précitées réémettent cette trame avec une décrémentation de la valeur de crédit, c'est-à-dire à crédit Ci = 2.

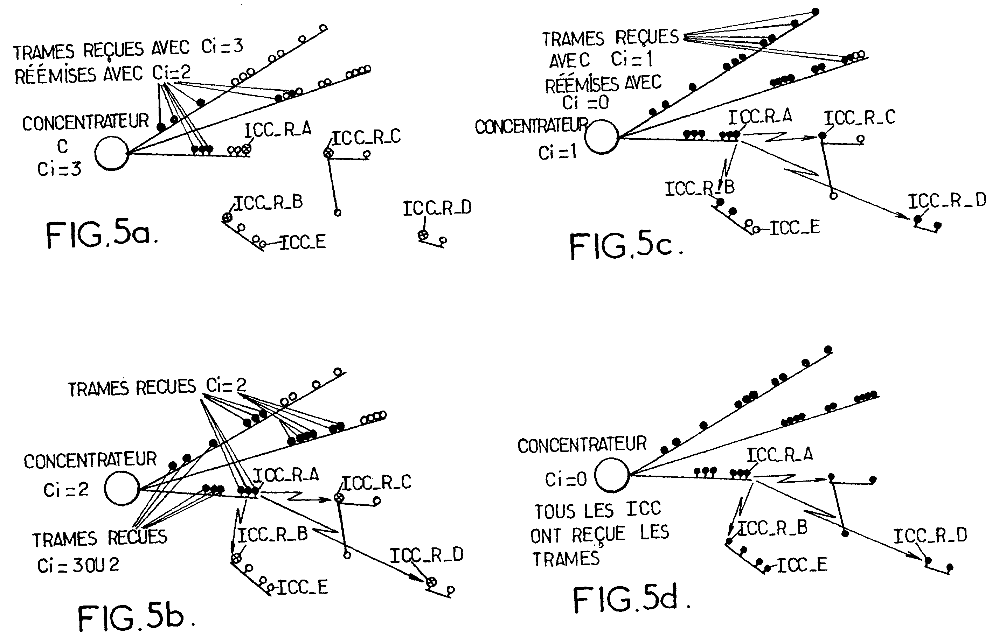

La figure 5b représente, suite à l'émission de la trame précitée à valeur de crédit Ci = 2, l'état de l'ensemble des interfaces I.C.C qui ont reçu la trame précitée avec un crédit de répétition égal à 3 ou 2. L'ensemble des interfaces I.C.C qui a reçu la trame précitée avec crédit de répétition = 3 ou 2 réémet en synchronisme avec une décrémentation de la valeur de crédit ci = 1. A l'étape de la figure 5b, le dispositif d'interfaçage I.C.C-R-A du réseau principal BT est réputé avoir reçu la trame emportant un crédit de répétition = 2. Dès la réception de cette trame, le dispositif d'interfaçage conforme à l'objet de la présente invention I.C.C-R-A réémet au temps de commutation près des voies par l'intermédiaire de l'émission radio, les messages ou trames correspondants vers les dispositifs d'interfaçage selon l'invention disposés sur les réseaux BT secondaires.

L'émission est effectuée avec un crédit de répétition ramené à la valeur 1.

Sur la figure 5c, on a représenté l'ensemble des interfaces I.C.C ayant reçu la trame précitée avec crédit de répétition à la valeur 1 ; cette trame est alors répétée sur l'ensemble du réseau BT principal et des réseaux BT secondaires après décrémentation à la valeur 0.

Enfin, sur la figure 5d, l'ensemble des interfaces I.C.C et des circuits d'interfaçage I.C.C-R-A, B, C, D, est réputé avoir reçu la trame de message précitée.

Sur la figure 5e, on a représenté un chronogramme de l'émission et de la répétition avec crédit de répétition de l'ensemble des trames précitées dans le cas du réseau de distribution BT représenté en figures 4 et 5a à 5d.

La réponse du circuit I.C.C notée E sur le réseau BT secondaire I est également représentée sur la figure 5e.

En liaison avec les figures 4 et 5a à 5e, on comprend que le dispositif d'interfaçage objet de la présente invention peut être utilisé pour assurer la transmission en mode interactif sur un réseau de distribution d'énergie électrique basse tension d'une pluralité de messages de gestion de services entre un centre de gestion et une pluralité d'installations de clients abonnés à ces services lorsque ces installations sont simplement interconnectées au réseau de distribution d'énergie électrique basse tension.

Le dispositif d'interfaçage objet de la présente invention présente une très grande souplesse d'utilisation, car il suffit, pour assurer la transmission des messages de gestion de services précités, que les branches continues ou discontinues du réseau de distribution d'énergie électrique telles qu'illustrées sur les figures précédemment mentionnées, comportent au moins un dispositif d'interfaçage selon l'invention, chaque abonné pouvant simplement être équipé d'un interface I.C.C précédemment mentionné dans la description. Dans un tel cas, chaque dispositif d'interfaçage selon l'invention est en liaison radioélectrique avec un autre dispositif d'interfaçage de la même branche ou d'une branche distincte, et permettent d'assurer la transmission des données et informations véhiculées par les courants porteurs basse tension CPL-BT en synchronisme sur chaque branche constitutive du réseau.

En outre, bien sûr, pour une branche de réseau de distribution d'énergie électrique basse tension à haute densité d'installations d'abonnés, il est possible de prévoir deux dispositifs d'interfaçage conformes à l'objet de la présente invention, en liaison radioélectrique de façon que ces dispositifs constituent deux à deux un by-pass permettant d'assurer une transmission directe des messages de gestion précités. Une telle utilisation est représentée sur la branche supérieure du réseau BT principal de la figure 4.

On a ainsi décrit un dispositif d'interfaçage d'une liaison bidirectionnelle courants porteurs basse tension CPL-BT/radiofréquence particulièrement performant dans la mesure où, d'une part, la transparence du codage des données ou informations véhiculées par les messages de gestion ou trames permet de s'affranchir de tous les problèmes de codage spécifiques de la transmission radio, et où, d'autre part, le synchronisme de la transmission des trames précitées est globalement conservé, quelle que soit la configuration du réseau de distribution BT en réseau principal et en réseaux de hameaux.

En outre, alors qu'actuellement le débit de transmission des messages par courants porteurs est limité à 300 bits par seconde, le passage à un débit de 600 bits par seconde est toutefois envisagé et le dispositif d'interfaçage objet de la présente invention n'apporte aucune limitation à une telle augmentation de débit.

En outre, en raison de la souplesse d'utilisation des dispositifs d'interfaçage objets de la présente invention, on indique que ceux-ci permettent d'assurer une gestion automatisée de tout abonné habitant dans des hameaux isolés et d'assurer une simplification de la gestion de la transmission de messages par courants porteurs, dans la mesure où, pour des réseaux BT à haute densité de circuits I.C.C, la mise en place de plusieurs dispositifs d'interfaçage conformes à l'objet de la présente invention permet d'alléger le processus de transmission par vagues à crédit de répétition.

En outre, on indique que la mise en oeuvre du dispositif d'interfaçage, objet de la présente invention, peut être réalisée de façon à rendre ce dispositif assimilable à un composant passif pour l'exploitant du réseau, un tel composant passif ne nécessitant aucune intervention de la part de ce dernier pendant de longues périodes d'exploitation.

## Revendications

1. Dispositif d'interfaçage d'une liaison bidirectionnelle courants porteurs basse tension CPL-BT / radiofréquence entre une ligne de distribution d'énergie électrique basse tension, permettant la transmission de signaux par courants porteurs, et l'espace radioélectrique, ce dispositif comportant des moyens (1) de couplage CPL-BT interconnectés à ladite ligne basse tension et permettant de délivrer, en réception, des premiers signaux (rcp) représentatifs d'une information en réception desdits courants porteurs et, en émission, lesdits courants porteurs pour transmission d'une information en émission desdits courants porteurs sur la ligne de basse tension, et un dispositif (2) de couplage et d'émission-réception radiofréquence, caractérisé en ce qu'il comporte :
- une première voie (I) courants porteurs basse tension/radiofréquence comportant au moins :
. des premiers moyens (10) de transformation desdits premiers signaux (rcp) représentatifs de l'information en réception desdits courants porteurs en un premier signal à fréquence intermédiaire (fi₁) modulé en amplitude par lesdits premiers signaux (rcp) représentatifs de l'information en réception desdits courants porteurs ;
. des premiers moyens (11) de transposition en fréquence dudit premier signal à fréquence intermédiaire en un signal de modulation d'émission radiofréquence (sme) ;
ledit dispositif (2) de couplage et d'émission-réception radiofréquence étant interconnecté auxdits premiers moyens de transposition (11) en fréquence et recevant d'une part, en émission, ledit signal de modulation d'émission radiofréquence (sme) pour effectuer l'émission d'un signal radiofréquence représentatif de l'information en réception desdits courants porteurs, et, d'autre part, en réception, un signal radiofréquence de réception (srfr), ledit dispositif d'interfaçage comprenant en outre, interconnectée audit dispositif de couplage et d'émission-réception ;
- une deuxième voie (II) radiofréquence /courants porteurs basse tension recevant ledit signal radiofréquence de réception (srfr) et comprenant au moins :
. des deuxièmes moyens (20) de transposition en fréquence dudit signal radiofréquence de réception (srfr) en un deuxième signal à fréquence intermédiaire (fi₂) de même fréquence que celle du premier signal à fréquence intermédiaire (fi₁) ;
. des deuxièmes moyens (21) de transformation du deuxième signal à fréquence intermédiaire (fi₂) en deuxièmes signaux (ecp) représentatifs de ladite information en émission desdits courants porteurs, lesdits deuxièmes moyens (21) de transformation étant interconnectés et délivrant lesdits deuxièmes signaux (ecp) représentatifs de ladite information en émission desdits courants porteurs auxdits moyens (1) de couplage CPL-BT, pour transmission de cette information sous forme de courants porteurs sur la ligne basse tension.

2. Dispositif selon la revendication 1, caractérisé en ce que lesdits moyens (1) de couplage CPL-BT délivrant lesdits premiers signaux (rcp) représentatifs de l'information en réception desdits courants porteurs à l'alternat basse tension sous forme d'un premier puis d'un deuxième signal basse fréquence de fréquence centrale distincte, lesdits premiers moyens (11) de transformation desdits premiers signaux (rcp) représentatifs de l'information en réception desdits courants porteurs comportent :
- un premier (101) et un deuxième (102) circuit de filtrage passe bande de réception, connectés en parallèle et centrés chacun sur la fréquence centrale du premier et du deuxième signal basse fréquence respectivement ;
- des moyens (103) de transposition en fréquence en réception connectés auxdits premier (101) et deuxième (102) circuit de filtrage passe bande de réception et délivrant ledit premier signal à fréquence intermédiaire (fi₁) et en ce que lesdits deuxièmes moyens (21) de transformation du deuxième signal à fréquence intermédiaire (fi₂) comportent :
. des moyens (211) de transposition en fréquence en émission, connectés auxdits deuxièmes moyens (20) de transposition en fréquence du signal radiofréquence de réception (srfr), recevant ledit deuxième signal à fréquence intermédiaire (fi₂), et délivrant un deuxième signal à fréquence intermédiaire transposé,
. un premier (212) et un deuxième (213) circuit de filtrage passe-bande d'émission connectés en parallèle et centré chacun sur l'une respectivement l'autre fréquence centrale du premier respectivement du deuxième signal basse fréquence et délivrant lesdits deuxièmes signaux (ecp) représentatifs d'une information en émission desdits courants porteurs centrés sur l'une respectivement l'autre desdites fréquences centrales auxdits moyens (1) de couplage CPL-BT.

3. Dispositif selon les revendications 1 et 2, caractérisé en ce que les moyens (20) de transposition en fréquence en réception, les moyens (11) de transposition en fréquence en émission, d'une part, et les premiers (10) et les deuxièmes (21) moyens de transposition en fréquence, d'autre part, comportent chacun :
- un circuit (110,2010) ; (1030,2110) de changement de fréquence, et
- un oscillateur (5,4) local commun.

4. Dispositif selon la revendication 1, caractérisé en ce que lesdits moyens de couplage CPL-BT délivrant lesdits premiers signaux représentatifs de l'information en réception (RCP) desdits courants porteurs à l'alternat basse tension sous forme d'un signal logique à deux valeurs complémentées, lesdits premiers moyens (10) de transformation comportent :
- des moyens (105) générateurs d'une onde sous-porteuse,
- des moyens (106) de modulation en amplitude recevant, d'une part, ladite onde sous-porteuse, et, d'autre part, lesdits premiers signaux (RCP) représentatifs de l'information en réception desdits courants porteurs et délivrant une onde sous-porteuse de réception modulée en amplitude (FI₁), jouant le rôle dudit premier signal à fréquence intermédiaire, et en ce que lesdits deuxièmes moyens (21) de transformation comportent :
. des moyens (215) démodulateurs d'amplitude recevant ledit deuxième signal à fréquence intermédiaire (FI₂) correspondant à une onde sous porteuse modulée en amplitude d'émission et délivrant une onde sous-porteuse (DFI₂) démodulée en amplitude d'émission ;
. un circuit de mise en forme (216) recevant l'onde sous-porteuse démodulée en amplitude d'émission et délivrant, auxdits moyens de couplage (1) CPL-BT, lesdits deuxièmes signaux représentatifs desdits courants porteurs à l'alternat basse tension sous forme d'un signal logique (ECP) à deux valeurs complémentées.

5. Dispositif selon l'une des revendications 1 à 4, caractérisé en ce que celui-ci comporte en outre un module (6) de gestion de la première (I) et de la deuxième voie (II), ledit module (6) de gestion permettant d'assurer la commutation de l'une ou l'autre desdites voies, entre au moins un état de veille, un état de réception et un état d'émission radio.

6. Dispositif selon la revendication 5, caractérisé en ce que ledit module (6) de gestion permet en outre d'assurer la commutation de l'une (I) ou l'autre voie (II) entre un état de veille et un état prioritaire d'émission, ce qui permet de programmer ledit dispositif parmi un ensemble de dispositifs en fonction de l'application considérée.

7. Utilisation d'un dispositif selon l'une des revendications 1 à 6 pour assurer la transmission, en mode interactif, sur un réseau de distribution d'énergie électrique basse tension, d'une pluralité de messages de gestion de services entre un centre de gestion et une pluralité d'installations de clients abonnés à ces services, ces installations étant interconnectées au réseau de distribution d'énergie électrique basse tension.

8. Utilisation selon la revendication 7, caractérisée en ce que le réseau de distribution d'énergie électrique basse tension étant subdivisé en branches continues ou discontinues, chaque branche comporte au moins un dispositif d'interfaçage selon l'une des revendications 1 à 6 en liaison radioélectrique avec un autre dispositif d'interfaçage de la même branche et/ou d'une branche distincte, deux dispositifs d'interfaçage (I.C.C) en liaison radioélectrique permettant d'assurer la transmission des données et informations véhiculées par lesdits courants porteurs basse tension CPL-BT en synchronisme sur chaque branche constitutive dudit réseau.

9. Utilisation selon l'une des revendications 7 ou 8, caractérisée en ce que, pour une branche de réseau de distribution d'énergie électrique basse tension à haute densité d'installations d'abonnés, ladite branche comporte au moins deux dispositifs d'interfaçage en liaison radioélectrique, lesdits dispositifs d'interfaçage (I.C.C) constituant deux à deux un by-pass permettant d'assurer une transmission directe desdits messages de gestion.

## Claims

1. An interface device for a bi-directional low voltage carrier current/ radio frequency carrier LC-LV connection between a low voltage electrical energy distribution line, allowing the transmission of signals by carrier currents, and radio space, this device comprising LC-LV coupling means (1) interconnected to said low voltage line and allowing to deliver, during reception, first representative signals (rcp) of information during reception of said carriers currents and, during transmission, said carrier currents for transmission of information during transmission of said carrier currents on the low voltage line, and a coupling and radio frequency transmission-reception device (2), characterized in that this comprises :
- a first low voltage carrier current radio frequency carrier channel (I) comprising at least :
first transformation means (10) of said first representative signals (rcp) of information during reception of said carrier currents into a first intermediate frequency signal (fi₁) amplitude modulated by said first representative signals (rcp) of information during reception of said carrier currents;
first frequency transposition means (11) of said first intermediate frequency signal into a radio frequency transmission modulation signal (sme);
said coupling (2) and radio frequency transmission-reception device being interconnected to said first means (11) of frequency transposition and receiving on the one hand, during transmission, said radio frequency modulation signal (sme) to carry out the transmission of a representative radio frequency signal of the information during reception of said carrier currents, and, on the other hand, during reception, a radio frequency reception signal (srfr), said interface device including moreover, interconnected to said coupling and transmission-reception device ;
- a second radio frequency/low voltage carrier current channel (II) receiving said radio frequency reception signal (srfr) and including at least:
second frequency transposition means (20) of said radio frequency reception signal into a second intermediate frequency signal (fi₂) of the same frequency as that of the first intermediate frequency signal (fi₁);
second transformation means (21) of the second intermediate frequency signal (fi₂) into second representative signals of said information during transmission of said carrier currents, said second transformation means (21) being interconnected and delivering said second representative signals (ecp) of said information during transmission of said carrier currents to said LC-LV coupling means, for transmission of this information in the form of carrier currents on the low voltage line.

2. A device according to claim 1, characterized in that said LC-LV coupling means (1) delivering said first representative signals (rcp) of information during reception of said low voltage half duplex carrier currents in the form of a first then a second low frequency signal of distinct central frequency, said first transformation means (11) of said first representative signals of information during reception of said carrier currents comprises:
- a first (101) and a second (102) reception pass band filter circuit, connected in parallel and each centered on the central frequency of the first and the second low frequency signal respectively:
- frequency transposition means (103) during reception connected to said first (101) and second (102) reception pass band filter circuit and delivering said first intermediate frequency signal (fi₁), and in that said second transformation means (21) of the second intermediate frequency signal (fi₂) comprises :
means (211) of frequency transposition during transmission, connected to said second frequency transposition means (20) of the reception radio frequency signal (srfr), receiving said second intermediate frequency signal (fi₂), and delivering a second transposed intermediate frequency signal,
a first (212) and a second (213) transmission pass band filter circuit connected in parallel and each centered on respectively the one and the other central frequency of respectively the first and second low frequency signal and delivering said second representative signals (ecp) of information during transmission of said carrier currents centered on respectively the one and the other of the said central frequencies to the LC-LV coupling means (1).

3. A device according to claims 1 and 2, characterized in that the frequency transposition means (20) during reception, the frequency transposition means (11) during transmission, on the one hand, and the first (10) and second (21) frequency transposition means, on the other hand, each comprise:
- a frequency change circuit (110, 2010); (1030,2110), and
- a common local oscillator (5,4).

4. A device according to claim 1, characterized in that said LC-LV coupling means delivering said first representative signals (rcp) of the information during reception of said low voltage half duplex carrier currents in the form of a logic signal with two complemented values, said first transformation means (10) comprise:
- generator means (105) of a sub-carrier wave,
- amplitude modulation means (106) receiving,
on the one hand, said sub-carrier wave, and, on the other hand, said representative signals (rcp) of the information during reception of said carrier currents and delivering an amplitude modulated reception sub-carrier wave, playing the role of said first intermediate frequency signal (fi₁), and in that said second transformation means (21) comprise:
■ amplitude demodulation means (215) receiving said second intermediate frequency signal (fi₂) corresponding to a transmission amplitude modulated sub-carrier wave and delivering a transmission amplitude demodulated sub-carrier wave (DFI₂);
■ a forming circuit (216) receiving the transmission amplitude demodulated sub-carrier wave and delivering, to said LC-LV coupling means (1), said second representative signals of said low voltage half-duplex carrier currents in the form of a logic signal (ECP) with two complemented values.

5. A device according to one of the claims 1 to 4, characterized in that this comprises moreover a management module (6) of the first (I) and the second (II) channel, said management module (6) allowing the commutation of one or other of said channels, between at least one waking state, a reception state and a radio transmission state to be ensured.

6. A device according to claim 5, characterized in that said management module (6) allows moreover the commutation of one (I) or other (II) channel between a waking state and a transmission priority state to be ensured, which allows said device among a set of devices to be programmed according to the considered application.

7. The use of a device according to one of the claims 1 to 6 to ensure transmission, in interactive mode, over a low voltage electrical energy distribution network, of several management service messages between a management center and several client installations subscribed to these services, these installations being interconnected to the low voltage electrical energy distribution network.

8. The use according to claim 7, characterized in that the low voltage electrical energy distribution network being subdivided in to continuous or discontinuous branches, each branch comprises at least one interface device according to one of the claims 1 to 6 in radio connection with another interface device of the same branch/ or a separate branch, two interface devices in radio connection allowing the transmission of data and information conveyed by said low voltage LC-LV carrier currents in synchronism on each constituent branch of said network to be ensured.

9. The use according to one of the claims 7 or 8, characterized in that, for a low voltage electrical energy distribution network branch with a high density of subscribed installations, said branch comprises at least two interface devices in radio connection, said interface devices constituting two by two a by-pass allowing a direct transmission of said management messages to be ensured.

## Patentansprüche

1. Schnittstellenvorrichtung für eine Zweirichtungsverbindung Niederspannungsträgerströme CPL-BT/Funkfrequenz zwischen einer Leitung zur Versorgung mit elektrischer Niederspannungsenergie, die die Übertragung von Signalen durch Trägerströme gestattet, und dem Funkraum, wobei diese Vorrichtung CPL-BT-Kopplungsmittel (1) aufweist, die mit der Niederspannungsleitung verbunden sind und es gestatten, bei Empfang erste Signalen (rcp) zu liefern, die für eine Empfangsinformation dieser Trägerströme repräsentativ sind, und bei Sendung diese Trägerströme zur Übertragung einer Sendeinformation dieser Trägerströme auf die Niederspannungsleitung zu liefern, sowie eine Kopplungs- und Funkfrequenz-Sende/Empfangs-Vorrichtung (2), dadurch gekennzeichnet, dass sie umfasst:
- einen ersten Kanal Niederspannungsträgerströme/Radiofre-quenz, der mindestens umfasst:
. erste Mittel (10) zur Umwandlung der ersten Signale (rcp), die für die Empfangsinformation dieser Trägerströme repräsentativ sind, in ein erstes Signal mit Zwischenfrequenz (fi₁), das durch diese für die Empfangsinformation der Trägerströme repräsentativen ersten Signale (rcp) amplitudenmoduliert wird;
. erste Mittel (11) zur Frequenzumsetzung des ersten Signals mit Zwischenfrequenz in ein Funkfrequenz-Sendungs-Modulations-Signal (sme); wobei diese Kopplungs- und Funkfrequenz-Sende/Empfangs-Vorrichtung (2) mit den ersten Frequenzumsetzungsmitteln (11) verbunden ist und einerseits bei Sendung das Funkfrequenz-Sendungs-Modulationssignal (sme) empfängt, um die Sendung eines Funkfrequenzsignals, das für die Empfangsinformation der Trägerströme repräsentativ ist, durchzuführen, und andererseits bei Emptang ein Empfangs-Funkfre-quenz-Signal (srfr) empfängt, wobei diese Schnittstellenvorrichtung außerdem, verbunden mit der Kopplungs- und Sende/Empfangs-Vorrichtung, umfasst:
- einen zweiten Kanal (II) Funkfrequenz/Niederspannungsträgerströme, der das Funkfrequenzempfangssignal (srfr) empfängt und mindestens umfasst:
. zweite Mittel (20) zur Frequenzumsetzung des Funkfrequenzempfangssignals (srfr) in ein zweites Signal mit Zwischenfrequenz (fi₂) mit derselben Frequenz wie das erste Signal mit Zwischenfrequenz (fi₁);
. zweite Mittel (21) zur Umwandlung des zweiten Signals mit Zwischenfrequenz (fi₂) in zweite für die Sendeinformation der Trägerströme repräsentative Signale (ecp), wobei die zweiten Umwandlungsmittel (21) mit den BT-CPL-Kopplungs-mitteln (1) verbunden sind und diesen die zweiten für die Sendeinformation der Trägerströme repräsentativen Signale (ecp) liefern, und zwar zur Übertragung dieser Information in Form von Trägerströmen auf der Niederspannungsleitung.

2. Vorrichtung nach Anspruch 1, dadurch gekennzeichnet, dass, wenn die CPL-BT-Kopplungsmittel (1) die ersten für die Empfangsinformation der Trägerströme repräsentativen Signale (rcp) abwechselnd mit Niederspannung in Form eines ersten und dann eines zweiten Niederfrequenzsignals mit verschiedener Mittelfrequenz liefern, die ersten Mittel (11) zur Umwandlung der ersten für die Empfangsinformation der Trägerströme repräsentativen Signale (rcp) umfassen:
- eine erste (101) und eine zweite (102) Empfangsbandfilterschaltung, die parallelgeschaltet sind und jeweils auf die Mittelfrequenz des ersten bzw. des zweiten Niederfrequenzsignals zentriert sind;
- Mittel (103) zur Frequenzumsetzung bei Empfang, die mit der ersten (101) und mit der zweiten (102) Empfangsbandfilterschaltung verbunden sind und das erste Signal mit Zwischenfrequenz (fi₁) liefern, und dass die zweiten Mittel (21) zur Umwandlung des zweiten Signals mit Zwischenfrequenz (fi₂) umfassen:
. Mittel (211) zur Frequenzumset zung bei Sendung, die mit den zweiten Mitteln (20) zur Frequenzumsetzung des Funkfrequenzempfangssignals (srfr) verbunden sind und das zweite Signal mit Zwischenfrequenz (fi₂) empfangen und ein zweites umgesetztes Signal mit Zwischenfrequenz liefern,
. eine erste (212) und eine zweite (213) Sendebandfilterschaltung, die parallelgeschaltet sind und jeweils auf die eine bzw. die andere Mittelfrequenz des ersten bzw. des zweiten Niederfrequenzsignals zentriert sind und die die zweiten für eine Sendeinformation der Trägerströme repräsentativen Signale (ecp), die auf die eine bzw. au die andere der Mittelfrequenzen zentriert sind, den CPL-BT-Kopplungsmitteln (1) liefern.

3. Vorrichtung nach den Ansprüchen 1 und 2, dadurch gekennzeichnet, dass die Mittel (20) zur Frequenzumsetzung bei Empfang, die Mittel (11) zur Frequenzumsetzung bei Sendung einerseits und die ersten (10) und zweiten (21) Mittel zur Frequenzumsetzung andererseits umfassen:
- eine Frequenzwechselschaltung (110, 2010; 1030,2110) und
- einen gemeinsamen örtlichen Oszillator (5, 4).

4. Vorrichtung nach Anspruch 1, dadurch gekennzeichnet, dass, wenn die CPL-BT-Kopplungsmittel die ersten für die Empfangsinformation der Trägerströme repräsentativen Signale (RCP) abwechselnd mit Niederspannung in Form eines logischen Signals mit zwei komplementierten Werten liefern, die ersten Umwandlungsmittel (10) umfassen:
- Mittel (105) zur Erzeugung einer Hilfsträgerwelle,
- Mittel (106) zur Amplitudenmodulation, die einerseits diese Hilfsträgerwelle und andererseits die ersten für die Empfangsinformation der Trägerströme repräsentativen Signale (RCP) empfangen und eine amplitudenmodulierte Empfangshilfsträgerwelle (FI₁) liefern, die die Aufgabe des ersten Signals mit Zwischenfrequenz hat, und dass die zweiten Umwandlungsmittel (21) umfassen:
. Amplitudendemodulationsmittel (215), die das zweite Signal mit Zwischenfrequenz (FI₂) aufnehmen, das einer am-plitudenmodulierten Sendehilfsträgerwelle entspricht, und eine amplitudendemodulierte Sendehilfsträgerwelle (DFl₂) liefern;
. eine Impulsformungsschaltung (216), die die amplitudendemodulierte Sendehilfsträgerwelle empfängt und den CPL-BT Kopplungsmitteln (1) die zweiten für die Trägerströme repräsentativen Signale abwechselnd mit der Niederspannung in Form eines logischen Signals (ECP) mit zwei komplementierten Werten liefern.

5. Vorrichtung nach einem der Ansprüche 1 bis 4, dadurch gekennzeichnet, dass sie außerdem ein Modul (6) zur Steuerung des ersten (I) und des zweiten Kanals (II) aufweist, das die Umschaltung des einen oder des anderen dieser Kanäle zwischen mindestens einem Bereitschaftszustand, einem Empfangszustand und einem Funksendezustand gestattet.

6. Vorrichtung nach Anspruch 5, dadurch gekennzeichnet, dass das Steuermodul (6) außerdem die Umschaltung des einen (I) oder des anderen Kanals (II) zwischen einem Bereitschaftszustand und einem Sendeprioritätszustand gestattet, was die Programmierung dieser Vorrichtung aus einer Gruppe von Vorrichtungen in Abhängigkeit von der betreffenden Anwendung gestattet.

7. Verwendung einer Vorrichtung nach einem der Ansprüche 1 bis 6 zur Durchführung der Übertragung einer Vielzahl von Meldungen zur Steuerung von Diensten in interaktivem Modus auf einem Netz zur Versorung mit elektrischer Niederspannungsenergie zwischen einer Steuerstation und einer Vielzahl von Kundenanlagen, die an diesen Diensten teilnehmen, wobei diese Anlagen an das Netz zur Versorgung mit elektrischer Niederspannungsenergie angeschlossen sind.

8. Verwendung nach Anspruch 7, dadurch gekennzeichnet, dass, wenn das Netz zur Versorgung mit elektrischer Niederspannungsenergie in ununterbrochene oder unterbrochene Zweige unterteilt ist, jeder Zweig mindestens eine Schnittstellenvorrichtung nach einem der Ansprüche 1 bis 6 in Funkverbindung mit einer anderen Schnittstellenvorrichtung desselben Zweigs und/oder eines anderen Zweigs aufweist, wobei zwei Schnittstellenvorrichtungen (I.C.C) in Funkverbindung die Übertragung der von den CPL-BT-Niederspannungs-trägerströmen beförderten Daten und Informationen synchron auf jedem das Netz bildenden Zweig gestatten.

9. Verwendung nach einem der Ansprüche 7 oder 8, dadurch gekennzeichnet, dass bei einem Zweig des Netzes zur Versorgung mit Niederspannungsenergie mit hoher Dichte von Teilnehmeranlagen dieser Zweig mindestens zwei Schnittstellen-vorrichtungen in Funkverbindung aufweist, wobei diese Schnittstellenvorrichtungen (I.C.C) paarweise einen Bypass bilden, der die Durchführung einer direkten Übertragung dieser Steuermeldungen gestattet.
